# EUROPEAN PATENT SPECIFICATION

(11) **EP 3 357 340 B1**
(45) Date of publication and mention of the grant of the patent: **22.06.2022**
(21) Application number: 16787909.7
(22) Date of filing: 28.09.2016
(51) Int. Cl.: A01N 65/12, A01N 65/38, A01N 65/42, A01P 1/00, A01P 3/00, A01P 5/00

(54) **AN ECOLOGICAL AGRICULTURAL SOIL DISINFECTANT COMPOSITION COMPRISING A MIXTURE OF CAPSICUM EXTRACT, MARIGOLD EXTRACT AND GARLIC EXTRACT**
EINE ÖKOLOGISCHE LANDWIRTSCHAFTLICHE BODENDESINFEKTIONSZUSAMMENSETZUNG, DIE EINE MISCHUNG VON KAPSIKUM-, RINGELBLUMEN- UND KNOBLAUCHEXTRAKT ENTHÄLT
UNE COMPOSITION DÉSINFECTANTE ÉCOLOGIQUE DES SOLS AGRICOLES COMPRENANT UN MÉLANGE D'EXTRAIT DE CAPSICUM, D'EXTRAIT DE SOUCI ET D'EXTRAIT D'AIL

(30) Priority: 29.09.2015 ES 201531384
(43) Date of publication of application: 08.08.2018
(73) Proprietor: Biopharma Research S.A., 14540 La Rambla Cordoba (ES)
(72) Inventor: NIETO DEL RIO, Juan, 14540 La Rambla Cordoba (ES)
(74) Representative: Sahuquillo Huerta, Jesús
(86) International application number: PCT/ES2016/070676
(87) International publication number: WO 2017/055658

(56) References cited:
- CA-A1- 2 214 925
- CN-A- 103 749 568
- CN-A- 104 026 170
- CN-A- 105 191 995
- US-A1- 2003 224 029
- US-A1- 2004 242 419
- US-A1- 2006 194 698
- US-A1- 2008 206 272
- Aminu-Taiwo B. R.: "Host Status of Some Selected Crops to Meloidogyne Incognita", , 1 January 2015 (2015-01-01), XP055320350, Retrieved from the Internet: URL:http://ijair.org/administrator/compone nts/com_jresearch/files/publications/IJAIR _1304_Final.pdf [retrieved on 2016-11-17]

## Description

An ecological agricultural soil disinfectant composition.

### Technical field

The present invention relates to a composition which acts as ecological disinfectant and as nematicide against pathogens in agricultural soils. This document describes its composition based on the mixture of Capsicum extract, Marigold extract and garlic extract.

### Background Art

Infections in agricultural soils are a very important problem for farmers because it limits and reduces the production, while decreasing the quality of crops. In order to minimize infections in the soil, chemically synthesized disinfectants have been typically used, but usually they generate waste that remain in the soil for years and they can move to the crops. To this fact it must be added the important toxicological risks due to its handling. Alternatively, many plant extracts have been studied as a viable option to replace synthetic disinfectants, as these natural extracts have low or no toxicity and low environmental persistence. Secondary metabolites with antimicrobial activity which may be present in the plant extracts, belong mainly to the families of terpenoids, phenolic compounds, phenylpropanoids, stilbenes, alkaloids and saponins. These secondary metabolites have the advantage of being rapidly degraded in the soil, usually do not have a toxic effect on mammals and they can be used in organic farming systems.

Among these extracts, compound obtained from plants of the genus Capsicum have been studied, and they have been shown to exhibit antifungal, antimicrobial and slightly nematocidal effects (Ceron-Carrillo et al, 2014; Moreno-Lemon et al, 2012; Santos-Neves et al., 2009). Analyses of these extracts indicated that the most important components thereof belong to the family of the capsaicinoid, like capsaicin, capsaicidine, capsidol, the capsianosides and capsicodendrin. These compounds present antibacterial and fungicides properties, among other effects.

Antimicrobial action mechanisms of the capsaicinoids begin causing osmotic stress and damage to the structure of the plasma membrane. Of all the compounds found in extracts of plants of the genus Capsicum, the most important is capsaicin, which is an amide obtained from vanillylamide. Capsaicin establishes poorly specific interaction with lipids, aligning its alkyl chain with the acyl chains of the phospholipids, while the hydroxyl groups and the amide of the capsaicin are oriented towards the water surface. This location on the surface of the phospholipid membrane allows that the polar part of capsaicin can form hydrogen bonds with the polar head of phospholipid, thus affecting the packaging of lipids and modifying their thermotropic properties.

Despite the proven anti-fungal and slightly nematicides properties of the Capsicum extract, its action is not sufficient to disinfect agricultural soils with a medium and high infection level, so it should be combined with other plant extracts that present synergy effects with the aim of potentiate their action.

Marigold extract can be used as a nematicide, but also it is an important natural source of carotenoids, natural fat-soluble pigments synthesized by plants, algae and photosynthetic bacteria (Emodi, 1978). Chemically, carotenoids are liposoluble tetraterpenes originated from the condensation of isoprenyl units, which give rise to a series of conjugated double bonds forming a chromophoric system. Due to its unsaturation, these compounds are sensitive to oxygen, metals, acids, peroxides, heat, light and lipoxygenase (Begoña et al., 2001). Carotenoids have important antioxidant properties that have been demonstrated in numerous studies (Carranco Jauregui et al, 2011; Stahl and Sies, 2003) and also, they protect plants against abiotic stress, as well as being involved in the photoprotection of them (Cazonnelli, 2011).

Garlic extract (*Allium sativum* L.) is widely used as a repellent and insecticide, but it also has fungicidal properties (Sealy et al., 2007) and nematicide effects (Gupta and Sharma, 1991; Nath et al, 1982; Stop and Guzman, 1997). These activities are possible because garlic extract contains significant amounts of sulphurous bioactive substances with antifungal, antibacterial and nematicides properties like allicin, and other allyl sulphides like diallyl disulphide or diallyl trisulphide, among others; and dithiins like 3-vinyl-[4H]-1,2-dithiin or 2-vinyl-[4H]-1,3-dithiin. In addition, garlic extract is composed of substances of the families of phenols, flavonoids and proanthocyanidins, all of them with important antioxidant activity (Otunola and Afolayan, 2013, Rady and Seif El- Yazal, 2014). These antioxidants reduce levels of free radicals and inhibit their subsequent generation, which prevent cell aging. In plant organisms, all these antioxidant compounds help plants to develop their own natural defence, making them stronger against external attacks. Due to its chemical composition, garlic extract could reinforce the action of the Capsicum extract in the formulation of a soil disinfectant.

Although the fungicidal and/or nematicide properties of these two extracts separately are known and they are being individually implemented in some agricultural formulations, the mixture potentiates separately the effect of said extracts, taking advantage of the bioactive compounds of each extract that would be interesting in each case. It has been found that these extracts show synergy effects between them, so a mixture thereof potentiates the action that would have individually applied to low application rate per hectare.

With the mixture, a formulation with strong antifungal and antimicrobial effect by the presence of capsaicinoids from Capsicum extract would be achieved. Furthermore, a nematicide effect would be obtained using Marigold extract, which provides parallel antioxidant capacity of carotenoids and a protection effect of plants against abiotic stress. Finally, the nematicide and fungicide effect is reinforced by the bioactive sulphur substances from garlic extract, which also would be contributing phenolic compounds with antioxidant activity.

The document CN105191995A belongs to the field of plant protection and relates to a farm-oriented composition containing macrolide antibiotics and composite plant source matters. The macrolide antibiotics are one or more selected from abamectin, ivermectin, milbemectin and spinosyn. The plant source matters are one or more selected from the crushed matters or crude extracts of pyrethrum, marigold and eupatorium adenophorum. Within a certain matching scope, the farm-oriented composition provided by the invention has excellent synergism effect and has an excellent preventing and treating effect for crop diseases and pests.

The document CN103749568A provides a manufacturing method for a biological pesticide. The pesticide comprises the following raw materials in parts by weight, 24-25 parts of a juice solution of radish, onion and garlic, 14-15 parts of a juice solution of pepper and zanthoxylum bungeanum, 6-7 parts of an alcohol extracted solution of pine leaves, 11-12 parts of a leaching solution of plant ash, 4-5 parts of an aqueous solution of sodium chloride, 5-7 parts of an aqueous solution of magnesium chloride and 3 parts of an aqueous solution of sodium carboxymethylcellulose. The above raw materials are mixed and stirred for preparing the finished product biological composite pesticide. The biological composite pesticide is prepared by employing a raw material preparation process A and a pesticide preparation process B through mixing and stirring. According to the pesticide provided by the invention, nontoxic plant raw materials are taken as the dominant raw materials and are cooperated with mineral raw materials, so that the pesticide is formed through compounding; the pesticide has the effects of contact poisoning, stomach poisoning, fumigating, sucking, trapping-killing, anaesthetizing, exciting and repelling pests, and inhibiting and killing bacteria, , is harmless to human and animals, and does not pollute environment, and is suitable for being used as a pesticide applied to control of plant insect diseases.

The document US2003/224029A1 discloses compositions and methods for repelling insects. The composition is formulated as an aqueous solution to be sprayed on a surface from which insects are to be repelled. In preferred embodiments, the composition is a non-toxic and biodegradable insect repellent comprising an aqueous carrier, at least about 0.05 percent by volume of hot pepper extract, at least about 0.05 percent by volume of garlic extract, and at least about 0.05 percent by volume of Neem seed oil.

The document CA2214925A1 uses the strengths of one or more organic actives and enhances the active(s) natural insecticidal properties by cleansing and revealing the outer layer of the target insects. This cleansing is supplied by the emulsifiable d-Limonene which robs the insect of its protective coating. After a short period of time the chosen active(s) will quickly bond to the body fluids of the target insect. The quantity of synergist and the choice of active(s) will afford control results from instant kill to many months of control.

The document CN104026170A discloses a natural plant pesticide, which comprises the following components in parts by weight: 10-15 parts of a sweetsop extracting solution, 5-8 parts of a *tagetes erecta* extracting solution, 3-5 parts of a *tripterygium wilfordii* extracting solution, 5-7 parts of an angled bittersweet extracting solution, 10-20 parts of *sophora flavescens* and 4-5 parts of a garlic extracting solution. The natural plant pesticide is free from any chemical agent, is harmless to a human body, and cannot pollute the environment.

The document US2008/206272A1 relates to a method for repelling pests, in particular insects, larvae, spiders, or aphids, from a plant, in particular from a tree or bush, wherein the method comprises making a hole down to the root zone of a plant and putting a natural insect repellent composition that contains at least garlic and/or an extract thereof in this hole. As a result of the method of administration according to the invention a homogeneous distribution is achieved by take up of the composition via the roots. In addition, the invention also relates to an insect repellent composition with an enhanced activity by combining the garlic with one or more of seaweed extract, soya oil, aloe vera, nut leaf extract, parsley extract, African Marigold extract, Nepeta extract and Urtica extract as a result of which a fungicidal and/or antifungal action, improved take up and/or improved vitality of the plant is achieved.

The document US2004/242419A1 discloses a systemic inducer comprising a nutrient combined with microorganismic substance extracted from microorganisms or insects. The nutrient or fertilizer includes an acid and/or the salt of phosphorus, potassium, calcium, sodium, magnesium, manganese, zinc, copper and iron. The microorganismic substance may be extracted from fungus, bacteria, virus or insects. The systemic inducer may be applied to stems, leaves, flowers or fruits of plants. Alternatively, the systemic inducer may be applied to soil to elicit a response via the roots of the plants. Finally, the systemic inducer may be injected into the stem or pseudo stem of the plants.

Amino et al "Host Status of Some Selected Crops to Meloidogyne Incognita" International Journal of Agriculture Innovations and Research 2015 Vol.3 No.5 pp.1532-1536 ref.34, published 06/04/2015 discloses that two screen house experiments were carried out to evaluate the reaction of 26 crops to *Meloidogyne incognita* and their possible effect on nematode population. Two-week old seedlings of each crop were inoculated with 5,000 eggs/second-stage juveniles (J2) of *M. incognita.* The plants were arranged in a completely randomized design with four replicates. The experiment was terminated two months after inoculation and the following data were collected: galling index (GI), number of nematode eggs in roots and nematode population in the soil. The Reproductive Factor (RF) was also calculated for each crop. The tested crops with RF less than one (RF <1.0) and GI less than 2 (GI <2), rated as non-hosts or resistant were, *Tagetes erecta* (marigold), bicolor (sorghum), *Zea mays* (Oba super 1 maize), indicum (sesame), *Allium sativum* (garlic), (moringa), *Occimum grattissimum* (tree basil), pruriens (velvet beans) and *Capsicum annuum* (pepper). Eight of the crops were susceptible with GI >2 and RF >1 while three crops; *Capsicum annuum* cv Yolo wonder (sweet pepper), *Amarathus crentus* (Green vegetables) and Curcuma longa (turmeric) were tolerant with GI <2 and RF ≥1. The result of this study suggests that these resistant crops may be used in a rotation on *Meloidogyne-infested* soil, as an alternative way of managing the root-knot nematode.

The document US2006/194698A1 provides methods for controlling weeds, plant pests, or plant pathogens comprising the application of a bioactive herbage (plant material) composition to soil as a soil amendment or as top dressing for potted plants. In certain embodiments, the method of controlling weeds, plant pests, or plant pathogens comprises the application of a bioactive herbage (plant material) composition to soil as a soil amendment or as top dressing for potted plants in amounts sufficient to control weeds, plant pests, or plant pathogens, wherein said bioactive herbage is obtained from: (a) Monarda spp.; (b) Chamaemelum spp.; (c) Matricaria spp.; (d) Chenopodium spp.; or (e) various combinations of thereof. Herbage can be dried, or wet and other sources of bioactive herbage are also suitable for use in the subject invention are provided.

### Summary of the invention

The composition of this invention consists of a mixture of plant extracts of Capsicum extract, Marigold extract and garlic extract, which acts against pathogens and/or nematicide as an ecological disinfectant for agricultural soils.

Knowing the action mechanisms of all plant extracts mentioned so far, the composition of a soil disinfectant and nematicide as a mixture of said extracts is proposed.
- Capsicum Extract, at a maximum concentration of 95% by weight of the total.
- Marigold extract, at a maximum concentration of 95% by weight of the total.
- Garlic extract, at a maximum concentration of 95% by weight of the total.

The percentage in which each extract is added to the final composition will depend on the effect that we want to achieve, thereby enhancing the properties of the extract (or extracts) of interest in each case.

The physical mixture of the components of the composition is carried out, and it is completed with the appropriate technological coadjuvants with the aim that the composition has the best features for managing and it complies with the proposed objective.

The final product is an ecological composition with an important fungicide and nematicide effect, used as a disinfectant for agricultural soil. It is not selective nor as fungicide even as nematicide, so it acts against some types of pathogenic fungus and against any species of nematodes. It also has some ability to prevent germination of weeds, resulting in a fungicidal, bactericide, nematicide and pre-emergence herbicide effect for agricultural soils.

This composition provides new technical advances over traditional disinfectants (DD, metam sodium, metam potassium), that allow to reach the same efficiency level and it solves problems in agricultural soils using more sustainable solutions.

After numerous agronomic researches about the functioning of disinfectant and nematicide composition of the present invention, it has been found that the most important aspect to get the best results is the application mode and the soil management throughout the treatment process. How to apply the formulation depends on the desired objective. Due to agronomic studies carried out, two operation modes have been defined: function as a disinfectant for killing pathogens, and function as nematicide.

### Brief description of the drawings

Below goes on to describe very briefly a series of drawings which aid in better understanding the invention and which are expressly related to an embodiment of said invention presented as a non-limiting example thereof.
Figure 1. Nematodes population level (%) for 14 days after application of the disinfectant and nematicide formulation.
Figure 2. Garlic production (%) depending on its sizes, in the control area and the area treated with disinfectant and nematicide formulation.

### Description of embodiments

### Use of extracts as disinfectants for removing soil pathogens.

In this case, the application dose of the preferential formulation was between 10 and 30 litres per hectare, according to the required needs by the infection level of the soil and the soil characteristics where it will be applied.

The application mode of the disinfectant composition of the present invention must follow these guidelines. First, a tillage of the soil must be done in order to achieve adequate aeration and proper soil texture, with the aim to facilitate a subsequently reactivity and diffusion of the active compounds formed. The action mode of the active substances contained in the composition is primarily by contact, so it is necessary to facilitate maximum contact between disinfectant and pathogenic microorganisms.

Then, the soil should be irrigated to achieve a level of moisture that reaches the maximum field capacity, as water will be the carrier for the disinfectant diffusion. The effectiveness will be conditioned by the ability of the soil to keep the applied formulation if possible and to take place the contact between substances applied and pathogens. In this sense, it is necessary to consider the soil structure for proper irrigation.

In very compacted soils, irrigation time should be increased to achieve correct water penetration and reach the proper humidity level and at the proper depth. In sandy soils that have no retention capacity it is also necessary to increase the irrigation time to reach the desirable capacity field without causing the disinfectant washing. Also, the holding capacity of these soils may be improved with appropriate products, as a contribution of organic matter through the irrigation system, either in solid or liquid composition.

Preferably, the composition must be applied through irrigation, spraying or micro-sprinkler irrigation. Devices that allow droplet sizes as small as possible and maximum coverage must be used, so that the greater diffusion must be obtained.

Once the disinfectant composition of the present invention has been applied to the soil surface, it is preferable to perform a new irrigation to enhance the penetration and diffusion of the product into the soil.

It is necessary to wait a period of at least 10 days before planting any crop with the aim that the fungicidal effect is completed. Disinfection with this composition can be performed prior to implantation of any type of crop.

Fungicidal action of the composition of the present invention acts against any pathogenic soil fungus and this fact is achieved in three stages:
a) A first stage of organic oxidation, which occurs once the product has been incorporated and distributed over the soil. During this stage, organic reactions occur with the aim to oxidize the organic fraction of soil and the pathogens. In this case it is very important that the soil texture is adequate, so it is recommended to carry out the tillage and irrigation procedure described above. Tillage allows that the composition penetrates in all infected zones, while irrigation water acts as diffusion carrier.
b) A second stage of allelopathic contact, in which a total destruction of the cell walls of biotic organisms occurs. These cell walls were already partly denatured by means of prior oxidation reactions. As a result, the final destruction of membranes is obtained by inhibiting the enzymes responsible for making the substances contained therein.
c) The last stage is a microbial regeneration, caused by elimination of pathogens microorganisms and contaminants from soil. This fact improves the physicochemical properties of soil, with a decrease in conductivity, pH and content of oxidized humus, which then allows the activation of beneficial microbial flora native which had been displaced by pathogens. This practice represents an important improvement of the physicochemical and microbiological features of the soil cultivation and its quality level, allowing greater viability of crops

The use of this composition as pathogens disinfectant in agricultural soils has significant advantages over conventional disinfectants which are currently used in agriculture. First, in order to achieve a similar control level, the dose of the composition of this invention is much lower than common disinfectants, which lower cost and lower consumption of resources is obtained. In addition, conventional products have significant toxicological and environmental risks, so much so that it must be applied by trained personnel. However, the disinfectant composition described here is a product that poses no risk of significant toxicity or environmental pollution, obtaining a much more sustainable disinfection of soil.

### Test 1

In order to illustrate the disinfecting action of the present invention, the following test describes the application of the composition on a greenhouse infected by various types of pathogens.

The application of the composition was performed in half of a parcel subsequently planted with courgettes and following the application procedure described herein at a dose of 10 L/ha, keeping the other half of the parcel as a control area.

The effectiveness of the composition was measured as a function of the obtained production (kg/ha), knowing that the production decreases when soil infection increases. Considering the type of crop used for the test (courgettes), production was continued for three consecutive weeks in the two halves of the parcel (infected control area and disinfected area). Results obtained about production are shown in Table 1, where it can be noted that production increased in the area treated with disinfectant from the first week compared to the control area, resulting an increase of 25% of production after three weeks of study. According to previous assumptions, it can be concluded that the application of the composition object of the present invention decreased the level of soil infection and consequently increased the production.

**Table 1. Courgette production (kg/ha) in greenhouses, on a soil infected by fungi, and untreated (control) and after treatment with the composition (disinfectant).**

| | Production (kg/ha) | |
|---|---|---|
| | Control | Disinfectant |
| 1^{st} week | 0 | 3426 |
| 2^{nd} week | 1286 | 4290 |
| 3^{rd} week | 3478 | 4639 |

### Nematicide effect.

This composition can be applied with any type of soil cultivation. The preferred application dose was between 2.5 and 10.0 litres of composition per hectare. A previous and proper soil management is needed in order to ensure that the nematicide comes into contact with nematodes to eliminate. To do this, previously to the application of the composition, abundant irrigations must be performed with the aim to reach the maximum field capacity or at least reach 70% of the field capacity. It is also necessary to note that the irrigation depends on the soil structure. Therefore, in compacted soils, irrigation has to be more abundant because water must penetrate properly. Similarly, for sandy soils the irrigation also has to be abundant to reach the desired field capacity.

Preferably, the application of the composition would be done by irrigation systems (pivot, droppers, sprays or nebulizers), but also the product can be applied via foliar application with treatments directed to the ground. The most efficient systems are those which allow greater and better dissemination, such as those with smaller nozzles and higher coverage on the field. In sandy soils, where the product can be washed from strong irrigations, the composition should preferably be applied together with organic matter, amino acids or both simultaneously, with the aim to increase their fixation and stability in soil.

Preferably, after application of the composition, it is necessary to irrigate the soil in order to promote maximum dispersion and maximum contact of the active substances of the composition with nematodes.

The nematocidal effect of the composition object of the present invention acts against adults and larvae of any species of nematode, and it occurs by contact and ingestion, presenting also penetration in the first vegetative layers of the root.

When the contact and/or ingestion of the composition by nematodes (larvae and/or adults) occurs, the membrane and the cysts or nodules coating are destroyed, inhibiting the enzymes responsible for the production of substances containing the nematode cuticle body. Consequently, nematode immobilization is produced and the death of 50% of the population in less than 24 hours and 80-100% in less than 96 hours from the application occurs.

This composition also has systemic power up to radicular rhizodermis zone, where it contacts with nematode larvae or adults found therein. Due to this capacity to penetrate, phenomena of rhizogenesis activation in the root system are activated by the proper effect of the formulated at the root.

Preferably, the application of the composition on the soil infected with nematodes must be performed at the following times:
1. At the beginning of the crop cycle and after germination in soils with nematodes. The application currently decreases the level of adults, which are dormant when weather conditions are not suitable for their activation. This allows achieving a reduction in nematode adult population level but not the level of eggs present in the cultivation soil.
2. When the activation of the nematode begins and the population level by eggs hatch present in the soil goes up, coinciding with the start of root crop activity (high temperature and soil moisture). This second application of the composition is of great importance to control the new larvae hatching from eggs existing in soil before passing to adulthood and carry put new eggs, thus in this phase a decreased level of eggs respects the initial. If the larvae are not controlled at this time, its development would entail a further increase of adults and new clutches of eggs, exponentially increasing the population levels in a few days.
3. After enough time (10-25 days), all eggs that may have still stay on the floor with prior treatment begin to hatch, starting the cycle larval development again. In this case, a third application of the composition is recommended in order to eliminate all the new larvae before they reach adulthood. A new egg laying is avoided and, a control between 75 and 100% of the starting population level and a very significant reduction in the presence of eggs in the soil is achieved. As a result, in greater production and high fruit quality is obtained, and a minimum level of infection soil for future crops.

Novelties and advantages of the composition of this invention against commercial nematicides are:
I. First, a higher level of control population of nematodes in soil, reaching percentages 75-100% in the case of this composition against much lower levels with commercial products.
II. In addition, control of nematodes is achieved reducing the negative effects on crops, resulting in increased production and better quality, especially regarding the size and specific weight of the fruits.
III. Finally, toxicological, and environmental exposures to chemicals are significantly decreased, as this is an ecological composition without term security for crops due to its almost instantaneous biodegradation, also decreasing the cost of the overall for the cultivation.

### Test 2

For checking the power of the nematicide composition described in this invention, an application test of the composition over a garlic cultivation infected by nematodes has been done.

Inside the plantation, two different areas were differentiated, leaving one of them as untreated control, and over the other one the proposed composition was applied at a dose of 5 L/ha through irrigation.

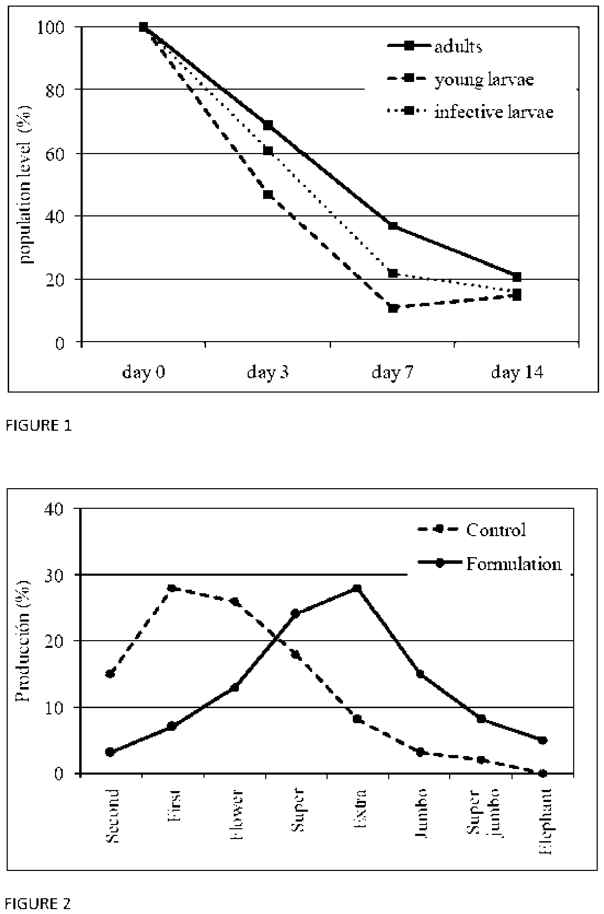

Population level of adult nematodes, young larvae and larvae previously infective treatment was measured. Results after 3, 7 and 14 days are shown in Figure 1.

The application of the disinfectant and nematicide composition reduced quickly the nematode population level during the first week, especially in the case of young larvae. After two weeks the level of nematodes was between 15 and 20% of the initial.

Considering that the infection level of the soil affects both production yield and quality of the crop, after harvesting both areas was performed, the garlic size was measured according to the classification established for garlic depending on their size. Low to larger sizes were differentiated: second, first, flower, super, extra, jumbo, super jumbo and elephant.

Figure 2 shows the percentage of production found for each garlic size. In the control area without treatment, size was lower than corresponding to the area treated with disinfectant and nematicide object of the present invention.

This result indicates a decrease of nematode population level during harvest. This fact is due to the application of this product that improves the overall size of garlic because the crop can develop according to their normal cycle.

### References

Begoña, O. A.; Granado, F. L.; Blanco, I. N. Carotenoides y Salud Humana. Editorial Fundación Española de la Nutrición, Madrid. 2001, pp. 13-63.

Carranco Jáuregui, M. E.; Calvo Carrillo M. C.; Perez-Gil Romo, F. Carotenoides y su función antioxidante: Revision. Arch. Latinoam. Nutr. 2011, 61, 233-241.

Cazzonelli, D. I. Carotenoids in nature: insights from plants and beyond. Funct. Plant Biol. 2011, 38, 833-847.

Ceron-Carrillo, T.; Munguía-Pérez, R.; Garcia, S.; Santiesteban-López, N.A. Actividad antimicrobiana de extractos de diferentes especies de chile (capsicum). Rev. Iberoam. Ciencias 2014, 1(2), 213-221.

Emodi, A. Carotenoids: Properties and applications. Food Technol. 1978, 32, 38-42.

Gupta, R.; Sharma, N.K. Nematicidal properties of garlic, Allium sativum. Indian J. Nematol. 1991, 21, 14-18.

Moreno-Limon, S.; Salcedo-Martinez, S.M.; Cárdenas-Ávila, M. L.; Hernández-Piñero, J.L.; Núñez-González, M.A. Efecto antifúngico de capsaicina y extractos de chile piquín (Capsicum annuum L. VAR. Aviculare) sobre el crecimiento In vitro de Aspergillus Flavus. Polibotánica 2012, 34, 171-184.

Nath, A.; Sharma, N.K.; Bhardmaj, S.; Thapa, C. D. Nematicidal properties of garlic. Nematologica 1982, 28, 253-255.

Otunola, G.A.; Afolayan, A.J. Evaluation of the polyphenolic contents and some antioxidant properties of aqueous extracts of Garlic, Ginger, Cayenne Pepper and their mixture. J.

Otunola, G.A.; Afolayan, A.J.Applied Bot. Food Qual. 2013, 86, 66-70.

Parada, R.Y.; Guzman, R.F. Evaluación de extractos botánicos contra el nematodo Meloidogyne incognita en frijol (Phaseolus vulgaris). Agronomía Mesoamericana 1997, 8(1), 108-114.

Rady, M.M.; Seif El-Yazal, M.A. Garlic extract as a novel strategy to hasten dormancy release in buds of 'Anna' apple trees. South Afr. J. Bot. 2014, 92, 105-111.

Santos Neves, W.; de Freitas, L.G.; Magalhães Coutinho, M.; Dallemole-Giaretta, R.; Silva Fabry, C.; Dev Dhingra, O.; Ferraz, S. Ação nematicida de extratos de alho, mostarda, pimenta malagueta, de oleo de mostarda e de dois produtos a base de capsainóides e alil isotiocianato sobre juvenis de Meloidogyne javanica, (treub) Chitwood, 1949, em casa de vegetação. Summa Phytopathol. 2009, 35(4), 255-261.

Sealy, R.; Evans, M.R.; Rothrock, C. The effect of a garlic extract and root substrate on soilborne fungal pathogens. HorTechnol. 2007, 17(2), 169-173.

Stahl, W.; Sies, H. Antioxidant activity of carotenoids. Mol. Aspects Medic. 2003, 24, 345-351.

## Claims

1. An ecological agricultural soil disinfectant composition consisting of a mixture of Capsicum extract and Marigold extract and garlic extract.

2. The composition according to claim 1 wherein the Capsicum extract is present in a maximum concentration of 95% w/w.

3. The composition according to claim 1 wherein the Marigold extract is present in a maximum concentration of 95% w/w.

4. The composition according to claim 1 wherein the garlic extract is present in a maximum concentration of 95% w/w.

## Patentansprüche

1. Ein ökologisches Desinfektionsmittel für landwirtschaftliche Böden, bestehend aus einer Mischung aus Capsicum-, Ringelblumen- und Knoblauchextrakt.

2. Die Zusammensetzung nach Anspruch 1, wobei der Capsicum-Extrakt in einer maximalen Konzentration von 95% (w/w) vorhanden ist.

3. Die Zusammensetzung nach Anspruch 1, wobei der Ringelblumenextrakt in einer maximalen Konzentration von 95 % (w/w) vorhanden ist.

4. Die Zusammensetzung nach Anspruch 1, wobei der Knoblauchextrakt in einer maximalen Konzentration von 95% (w/w) vorhanden ist.

## Revendications

1. Une composition désinfectante écologique pour les sols agricoles, constituée d'un mélange d'extrait de Capsicum et d'extrait de Souci et d'extrait d'ail.

2. La composition selon la revendication 1 dans laquelle l'extrait de Capsicum est présent dans une concentration maximale de 95% p/p.

3. La composition selon la revendication 1, dans laquelle l'extrait de Souci est présent à une concentration maximale de 95% p/p.

4. La composition selon la revendication 1, dans laquelle l'extrait d'ail est présent à une concentration maximale de 95% p/p.
